# EUROPEAN PATENT APPLICATION

(11) **EP 3 975 547 A1**
(43) Date of publication of application: **30.03.2022**
(21) Application number: 20818577.7
(22) Date of filing: 18.05.2020
(51) Int. Cl.: H04N 5/235

(54) **HIGH DYNAMIC RANGE (HDR) IMAGE GENERATION METHOD AND APPARATUS, AND ELECTRONIC DEVICE AND COMPUTER-READABLE STORAGE MEDIUM**

(30) Priority: 06.06.2019 CN 201910492947
(71) Applicant: GUANGDONG OPPO MOBILE TELECOMMUNICATIONS CORP., LTD., Dongguan, Guangdong 523860 (CN)
(72) Inventor: KANG, Jian, Dongguan, Guangdong 523860 (CN)
(74) Representative: Manitz Finsterwald Patent- und Rechtsanwaltspartnerschaft mbB
(86) International application number: PCT/CN2020/090803
(87) International publication number: WO 2020/244374

(57) **Abstract**

The present application relates to a high dynamic range (HDR) image generation method and apparatus, and an electronic device and a computer-readable storage medium. The method comprises: when previewing a photography scene separately by means of a first camera, photographing the photography scene separately by means of at least two second cameras to generate an original target image; obtaining the brightness holographic data of the photography scene according to the original target image; determining at least two groups of target exposure parameters according to the brightness holographic data of the photography scene, configuring the exposure parameters of the first camera as at least two groups of target exposure parameters, and photographing the photography scene by means of the configured first camera separately to generate the at least two target images; and combining the at least two target images to obtain an HDR image.

## Description

The present application claims the foreign priority of Chinese Patent Application No. 201910492947.1, named "HIGH DYNAMIC RANGE (HDR) IMAGE GENERATION METHOD AND APPARATUS, AND ELECTRONIC DEVICE AND COMPUTER-READABLE STORAGE MEDIUM", filed on June 06, 2019 in the National Intellectual Property Administration of China, the entire contents of which are hereby incorporated by reference in its entirety.

### TECHNICAL FIELD

The present disclosure relates to the field of computer technologies, and in particular to a method, an apparatus, an electronic device and a computer-readable non-transitory storage medium for generating a high dynamic range image (HDR).

### BACKGROUND

With the continuous development of photography techniques, users have higher requirements on photography of cameras of electronic devices. Traditional electronic devices develop with single cameras develops to dual-camera devices, and quality of photography has significant improvement. However, the requirements of users on photography of electronic devices increase accordingly, for example, how to improve photography quality of electronic devices further and satisfy users' higher requirements in different lighting environments, is an urgent problem to be solved.

### SUMMARY OF THE DISCLOSURE

Embodiments of the present disclosure provide a method, an apparatus, an electronic device and a computer-readable non-transitory storage medium for generating a high dynamic range image, which may improve photography quality of electronic devices and satisfy higher photography requirements.

A method for generating an HDR image, comprising:
generating target original images by shooting a shooting scene with at least two second cameras, when previewing the shooting scene with a first camera;
acquiring brightness holographic data of the shooting scene according to the target original images;
determining at least two sets of target exposure parameters according to the brightness holographic data of the shooting scene, configuring one of the at least two sets of target exposure parameters as exposure parameters of the first camera, respectively, and generating at least two target images, wherein each of the at least two target images is generated by shooting the shooting scene with the first camera configured with respect to one unique set of the at least two sets of target exposure parameters; and
synthesizing the at least two target images and acquiring the HDR image.

An apparatus for generating an HDR image, comprising:
a target original image generation module, configured to generate target original images by shooting a shooting scene with at least two second cameras, when preview the shooting scene with a first camera;
a brightness holographic data acquisition module, configured to acquire brightness holographic data of the shooting scene according to the target original images;
a target image generation module, configured to determine at least two sets of target exposure parameters according to the brightness holographic data of the shooting scene, configure one of the at least two sets of target exposure parameters as exposure parameters of the first camera, respectively, and generate at least two target images, wherein each of the at least two target images is generated by shooting the shooting scene with the first camera configured with respect to one unique set of the at least two sets of target exposure parameters; and
an HDR image synthesizing module, configured to synthesize the at least two target images and acquire the HDR image.

An electronic device comprising a memory and a processor, wherein the memory stores a computer program and when the computer program is executed by the processor, the processor performs operations of methods for generating an HDR image as described above.

A computer-readable non-transitory storage medium storing computer program, wherein the computer program when executed by a processor executes the methods as described above.

### BRIEF DESCRIPTION OF THE DRAWINGS

In order to more clearly illustrate the technical solutions in the embodiments of the present disclosure or prior arts, the drawings that need to be used in the embodiments or prior arts are briefly described below. Apparently, the drawings described below are only some embodiments of the present disclosure, for a person skilled in the art, other accompanying drawings may be acquired from these drawings without creative effort.
FIG. 1 is an application environment diagram of a method for generating an HDR image according to an embodiment of the present disclosure.
FIG. 2 is a flow chart of a method for generating an HDR image according to an embodiment of the present disclosure.
FIG. 3 is a schematic diagram of a brightness distribution histogram according to an embodiment of the present disclosure.
FIG. 4 is a flow chart of a method for generating target original images by shooting a shooting scene with at least two second cameras in FIG. 2.
FIG. 5 is a flow chart of a method for generating second target original images in FIG. 4.
FIG. 6 is a flow chart of a method for generating third target original images in FIG. 4.
FIG. 7 is a flow chart of a method for generating a target image in FIG. 2.
FIG. 8 is a structural diagram of an apparatus for generating an HDR image according to an embodiment of the present disclosure.
FIG. 9 is a schematic diagram of an internal structure of an electronic device according to an embodiment of the present disclosure.
FIG. 10 is a schematic diagram of an image processing circuit according to an embodiment of the present disclosure.

### DETAILED DESCRIPTION

To make the purpose, technical solutions, and advantages of the present disclosure clearer, embodiments and drawings are provided below to elaborate the present disclosure further in details. Understandably, descriptions of specific embodiments are only for explaining the present disclosure, and not for limitation.

It should be understood that, terminologies used in the present disclosure, such as "first", "second" may be used to describe different kinds of components, but the components are not limited by the terminologies. These terminologies are only used for distinguishing a first compnent and another component. For example, within the scope of the present disclosure, a first camera may be called a second camera, and similarly, the second camera may be called the first camera. The first camera and the second camera are both cameras, but not the same camera.

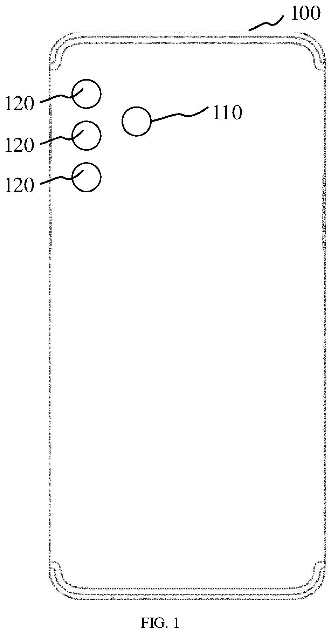

FIG. 1 is an application environment diagram of a method for generating an HDR image according to an embodiment of the present disclosure. As shown in FIG. 1, the application environment includes an electronic device 100. The electronic device 100 includes at least one first camera 110 and at least two second cameras 120. The electronic device 100 generates target original images by shooting a shooting scene with at least two second cameras, when the shooting scene is previewed with a first camera; acquires brightness holographic data of the shooting scene according to the target original images; determines at least two sets of target exposure parameters according to the brightness holographic data of the shooting scene, configures one of the at least two sets of target exposure parameters as exposure parameters of the first camera, respectively, and generates at least two target images, wherein each of the at least two target images is generated by shooting the shooting scene with the first camera configured with respect to one unique set of the at least two sets of target exposure parameters; and synthesizes the at least two target images and acquires the HDR image. Understandably, the above electronic device 100 may be, but not limited to, mobile phone, computer, portable devices etc.

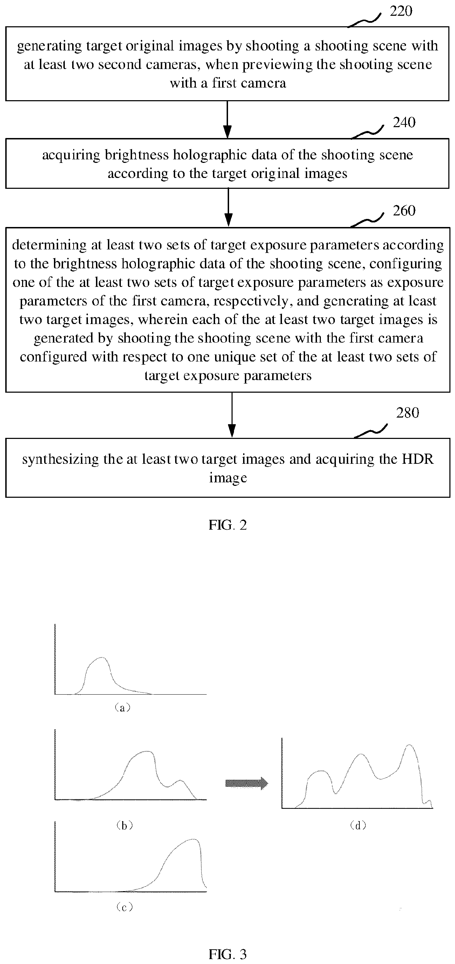

FIG. 2 is a flow chart of a method for generating an HDR image according to an embodiment of the present disclosure. As shown in FIG. 2, the method for generating the HDR image includes operations from 220 to 280.

At operation 220, generating target original images by shooting a shooting scene with at least two second cameras, when previewing the shooting scene with a first camera.

When an electronic device receives an instruction to turn on cameras, the electronic device may put a first camera on shooting mode, i.e. a shooting scene is previewed with the first camera, and the first camera includes a primary camera. Then, when the shooting scene is previewed with the first camera, target original images are generated by shooting a shooting scene with at least two second cameras, and the second camera includes the primary camera and a secondary camera. An object of the shooting scene may be scanned with the second camera to form image frames, which are the target original images.

When the electronic device includes one primary camera and two secondary cameras, and the electronic device receives the instruction to turn on the cameras, the primary camera may be put on shooting mode, i.e. the shooting scene is previewed with the primary camera (a preview page seen by a user). Then, when the shooting scene is being previewed with the primary camera, target original images are generated by shooting the shooting scene with the two secondary cameras respectively, wherein one secondary camera may shoot one image frame, or one secondary camera may shoot multiple image frames repeatedly; so, a number of target original images that are generated is two or more. Also, the secondary camera shoots different images each time with different exposure parameters, i.e. the two secondary cameras shoot images with different exposure parameters, and each of the two secondary cameras uses different exposure parameters for each shot.

The process of shooting with at least two secondary cameras is specifically as follows. First, one frame of a target original image is acquired by shooting with one secondary camera applying normal exposure parameters; then, another frame of the target original image is acquired by shooting with the secondary camera applying underexposed exposure parameters with respect to normal exposure parameters; next, another frame of target original image is acquired by shooting with the secondary camera applying overexposed exposure parameters with respect to normal exposure parameters. Apparently, these three target original images contain different image information, such that brightness holographic data of the shooting scene acquired according to the three target original images, would be more accurate and comprehensive. The exposure parameters include, but not limited to, one or a combination of photosensitivity, photometric exposure, and exposure duration, etc.; when other parameters remain constant, overexposed exposure parameters are acquired by increasing exposure duration; when other parameters remain constant, underexposed exposure parameters are acquired by decreasing exposure duration.

At operation 240, acquiring brightness holographic data of the shooting scene according to the target original images.

Specifically, after generating target original images by shooting the shooting scene with at least two second cameras, brightness distribution data of each of the target original images is acquired, and brightness holographic data of the shooting scene is synthesized according to the brightness distribution data of each of the target original images.

There are two or more frames of the target original images. For example, when the electronic device includes only two secondary cameras, two image frames are acquired by shooting with the two secondary cameras respectively, one of the two image frames may be an image of overexposed shooting, and another one of the two image frames may be an image of under exposed shooting. Then, brightness distribution data of the two image frames, wherein the brightness distribution data specifically is brightness distribution histogram, and brightness holographic data is brightness distribution histogram of the shooting scene. In the brightness distribution histogram, x-axis represents brightness of an image, and the brightness is from full black on the left to full white on the right; and a y-axis represents number of pixels of the image with that is relevant with a certain brightness range. Brightness of an image may be accurately evaluated by the brightness distribution histogram. After acquiring brightness distribution histograms of the two image frames, the brightness distribution histograms of the two images may be synthesized to acquire the brightness holographic data of the shooting scene.

Certainly, when at least two target original images are generated by shooting the shooting scene with at least two second cameras, brightness distribution histograms of the target original images are acquired, and then all brightness distribution histograms are synthesized to acquire brightness holographic data of the shooting scene. As shown in FIG. 3, which is a schematic diagram of synthesizing brightness distribution histograms of three image frames to acquire a brightness holographic histogram of a shooting scene. A brightness distribution histogram is a quantitative tool to check brightness of an image, wherein an x-axis represents brightness, the more to the right, the higher the brightness; and the y-axis represents number, the more to the top, the greater the number. So, the brightness distribution histogram represents brightness distribution of each pixel of the image.

FIG. 3(a) is a brightness distribution histogram of a target original image acquired by short-term exposure on the shooting scene; FIG. 3(b) is a brightness distribution histogram of a target original image acquired by normal exposure on the shooting scene; FIG. 3(c) is a brightness distribution histogram of a target original image acquired by long-term exposure the shooting scene. FIG. 3(d) is a brightness distribution histogram of the shooting scene, i.e. brightness holographic data, wherein the brightness distribution histogram is synthesized by FIG 3(a), FIG 3(b), and FIG 3(c). The short-term exposure means shooting with exposure duration shorter than exposure duration of normal exposure, and the long-term exposure means shooting with exposure duration longer than exposure duration of normal exposure.

At operation 260, determining at least two sets of target exposure parameters according to the brightness holographic data of the shooting scene, configuring one of the at least two sets of target exposure parameters as exposure parameters of the first camera, respectively, and generating at least two target images, wherein each of the at least two target images is generated by shooting the shooting scene with the first camera configured with respect to one unique set of the at least two sets of target exposure parameters.

Since brightness of an image may be accurately evaluated by the brightness holographic data (i.e. a brightness distribution histogram) of the shooting scene, at least two sets of target exposure parameters may be determined according to the brightness holographic data of the shooting scene. The two sets of exposure parameters may include one set of overexposure parameters, one set of underexposure parameters, and may certainly include one set of normal exposure parameters.

After determining at least two sets of exposure parameters, the electronic device may receive shooting instruction, one of the at least two sets of exposure parameters is configured as exposure parameters of a first camera, shoots and generates a target image. Then, another one of the at least two sets of exposure parameters is configured as exposure parameters of the first camera, shoots and generates another target image. Similarly, other sets of parameters are configured as exposure parameters of the first camera, shoots and generates another target image.

Shooting instruction may be triggered by relevant touch operation detected, press operation of physical button, or voice control operation, etc. The electronic device may provide shooting button for triggering shooting, when a click operation on the shooting button is detected, shooting instruction is triggered. The electronic device may preset shooting voice message for triggering the shooting instruction. The shooting instruction may be triggered by receiving voice message with voice receiving apparatus, analyzing the voice message, and determining the voice message matches with the shooting voice message.

At operation 280, synthesizing the at least two target images and acquiring the HDR image.

After acquiring at least two target images, the at least two target images are synthesized and an HDR image is acquired. HDR i.e. high dynamic range image, compared to normal image, an HDR image may provide more dynamic range and image details.

A method for generating the HDR image in the present embodiment. Target original images are generated by shooting the shooting scene with at least two second cameras, shooting speed is faster, and brightness holographic data of the shooting scene is acquired according to the target original images. Further, at least two target exposure parameters are determined according to the brightness holographic data of the shooting scene, one of the at least two sets of target exposure parameters is configured as exposure parameters of the first camera, respectively, and at least two target images are generated, wherein each of the at least two target images is generated by shooting the shooting scene with the first camera configured with respect to one unique set of the at least two sets of target exposure parameters. The at least two target images includes more comprehensive image information, such that when the at least two target images are synthesized to acquire the HDR image, more dynamic range and image details may be provided.

In an embodiment, target original images include first target original images, second target original images, and third target original images.

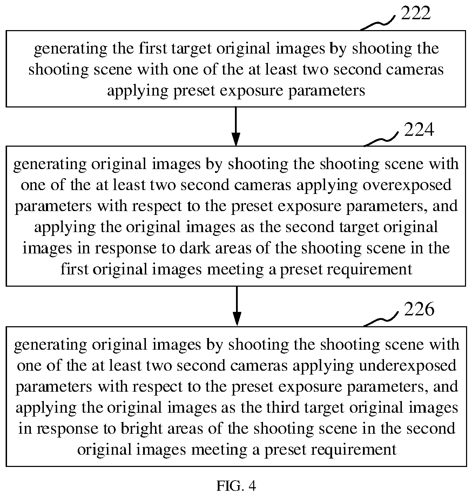

As shown in FIG. 4, operation 220, generating target original images by shooting a shooting scene with at least two second cameras, includes the following.

Operation 222, generating the first target original images by shooting the shooting scene with one of the at least two second cameras applying preset exposure parameters.

Preset exposure parameters are exposure parameters of an electronic device matching with a shooting scene, the electronic device has corresponding relationship table stored, wherein the corresponding relationship is between the shooting scene and the matching exposure parameters, and by configuring the camera with the matching exposure parameters, an image of the shooting scene with normal exposure parameters may be shoot with the configured camera. The electronic device may find the exposure parameters matching with the shooting scene by looking up in the table, and then configure one of the at least two second cameras with the exposure parameters matching with the shooting scene, and generate the first target original images by shooting the shooting scene. The first target original images are normally exposed image.

Operation 224, generating original images by shooting the shooting scene with one of the at least two second cameras applying overexposed parameters with respect to the preset exposure parameters, and applying the original images as the second target original images in response to dark areas of the shooting scene in the first original images meeting a preset requirement.

Overexposed parameters with respect to the preset exposure parameters at preset intervals are acquired, and the overexposed parameters are applied as current exposure parameters; the current exposure parameters are configured as exposure parameters of one of the at least two second cameras; an original images is generated by shooting the shooting scene with the configured second camera; whether bright areas of the shooting scene in the original images meet a preset requirement is determined, in response to the bright areas of the shooting scene in the original images meeting a preset requirement, the original images are applied as the third target original images; and in response to the dark areas of the shooting scene in the original images not meeting the preset requirement, a loop of acquiring overexposed parameters is returned to with respect to the preset exposure parameters at preset intervals and applying the overexposed parameters as new current exposure parameters, until the second target original images are acquired.

For example, when the exposure parameters here are photometric exposure (a value corresponding to photometric exposure is represented as EV), the preset interval may be 1EV, wherein the EV is an abbreviation of Exposure Value, and represents a value for how much exposure present. The original definition is as follows: when photosensitivity is ISO 100, f-number is F1, and exposure duration is 1 second, photometric exposure is defined as 0EV; the photometric exposure decreases by one (current shutter halves or f-number decreases by one) is defined as -1EV; the photometric exposure increases by one (current shutter doubles or f-number increases by one) is +1EV.

Exposure parameters for generating the first target original images are applied as 0EV, exposure parameters overexposed +1EV with respect to preset exposure parameters are acquired according to the preset interval of 1EV, and the overexposed exposure parameters are applied as current exposure parameters.

Operation 226, generating original images by shooting the shooting scene with one of the at least two second cameras applying underexposed parameters with respect to the preset exposure parameters, and applying the original images as the third target original images in response to bright areas of the shooting scene in the second original images meeting a preset requirement.

Underexposed parameters with respect to the preset exposure parameters at preset intervals are acquired, and the underexposed parameters are applied as current exposure parameters; the current exposure parameters are configured as exposure parameters of one of the at least two second cameras; an original images is by shooting the shooting scene with the configured second camera; whether bright areas of the shooting scene in the original images meet a preset requirement is determined, in response to the bright areas of the shooting scene in the original images meeting a preset requirement, the original images are applied as the third target original images; and in response to the bright areas of the shooting scene in the original images not meeting a preset requirement, a loop of acquiring underexposed parameters is returned to with respect to the preset exposure parameters at preset intervals and applying the underexposed parameters as new current exposure parameters, until the third target original images are acquired.

For example, when the exposure parameters here are photometric exposure (a value corresponding to photometric exposure is represented as EV), the preset interval may be 1EV, wherein the EV is an abbreviation of Exposure Value, and represents a value for how much exposure present. The original definition is as follows: when photosensitivity is ISO 100, f-number is F1, and exposure duration is 1 second, photometric exposure is defined as 0EV; the photometric exposure decreases by one (current shutter halves or f-number decreases by one) is defined as -1EV; the photometric exposure increases by one (current shutter doubles or f-number increases by one) is +1EV.

In an embodiment of the present disclosure, first target original images are generated by shooting a shooting scene with one of at least second cameras applying preset exposure parameters the first target original images are images with normal exposure. Then, overexposed exposure parameters with respect to preset exposure parameters are acquired at preset intervals, wherein the overexposed exposure parameters are applied as current exposure parameters; exposure parameters of one of the at least two second cameras are configured as the current exposure parameters and second target original images are acquired by shooting, wherein the second target original images are overexposed images.

Finally, underexposed exposure parameters with respect to preset exposure parameters are acquired at preset intervals, wherein the underexposed exposure parameters are applied as current exposure parameters; exposure parameters of one of the at least two second cameras are configured as the current exposure parameters and third target original images are acquired by shooting the shooting scene. Therefore, images with normal exposure, overexposure, and underexposure are acquired, since different image information is contained in images with different exposures, images with normal exposure, overexposure, and underexposure cover more comprehensive and detailed information. Consequently, brightness holographic data of the shooting scene is acquired according to the three types of images, and the acquired brightness holographic is more comprehensive and accurate.

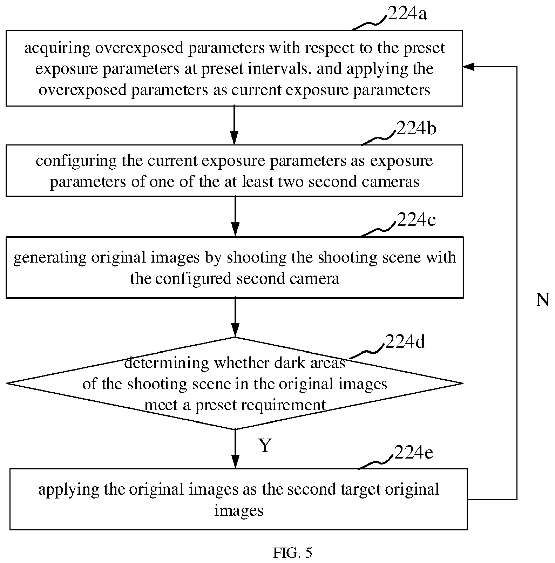

In an embodiment of the present disclosure, as shown in FIG. 5, operation 224, generating original images by shooting the shooting scene with one of the at least two second cameras applying overexposed parameters with respect to the preset exposure parameters, and applying the original images as the second target original images in response to dark areas of the shooting scene in the first original images meeting a preset requirement includes the following.

Operation 224a, acquiring overexposed parameters with respect to the preset exposure parameters at preset intervals, and applying the overexposed parameters as current exposure parameters.

Operation 224b, configuring the current exposure parameters as exposure parameters of one of the at least two second cameras.

Operation 224c, generating the original images by shooting the shooting scene with the configured second camera.

Operation 224d, determining whether dark areas of the shooting scene in the original images meet a preset requirement, in response to the dark areas of the shooting scene in the original images meeting the preset requirement, proceeding to operation 224e and applying the original images as the second target original images.

In response to the dark areas of the shooting scene in the original images not meeting the preset requirement, returning to operation 224a and acquiring overexposed parameters with respect to the preset exposure parameters at preset intervals and applying the overexposed parameters as new current exposure parameters, until acquiring the second target original images.

Specifically, for example, when the exposure parameters here are photometric exposure (a value corresponding to photometric exposure is represented as EV), the preset interval may be 1EV. Exposure parameters for generating the first target original images are applied as 0EV, exposure parameters overexposed +1EV with respect to preset exposure parameters are acquired according to the preset interval of 1EV, and the overexposed exposure parameters are applied as current exposure parameters. Exposure parameters are increased from 0EV to 1EV, which may be implemented by doubling shutter or increasing f-number by one. Normally, since an f-number of an electronic device is fixed, with other exposure parameters staying constant, photometric exposure is increased from 0EV to 1EV by doubling shutter. Certainly, there are other ways of increasing photometric exposure from 0EV to 1EV. Current exposure parameters are configured as exposure parameters of one of the at least two second cameras.

Under one circumstance, exposure parameters of a camera that shoots first target original images may be adjusted, specifically are increasing photometric exposure from 0EV to 1EV. Then, original images are generated by shooting with the camera having photometric exposure of 1EV. Since they are overexposed images, whether the original images meet a preset requirement is further determined, i.e. whether resolution of dark areas meets a preset standard, in response to the resolution of dark areas meeting the preset standard, the original images are applied as second target original images. The preset standard may be defined according to practical situations.

In response to the resolution of dark areas not meeting the preset standard, the first step is returned to and current exposure parameters are redefined as follows. Again, overexposed photometric exposure +2EV with respect to +1EV is acquired at preset intervals 1EV, wherein the +2EV is applied as current photometric exposure, and a loop of operations 224a to 224d is entered, until the resolution of dark areas of the original images is determined to meet the preset standard, and the original images are applied as the second target original images.

Under another circumstance, exposure parameters of a second camera may be adjusted, specifically is setting photometric exposure of the second camera to be 1EV. Then, original images are generated by shooting with the camera having photometric exposure of 1EV. Since they are overexposed images, whether dark areas of the original images meet a preset requirement is further determined, i.e. whether a resolution of the dark areas meets a preset standard, in response to the resolution of the dark areas meeting the preset standard, the original images are applied as second target original images. The preset standard may be defined according to practical situations.

In response to the resolution of the dark areas not meeting the preset standard, the first step is returned to and current exposure parameters are redefined as follows. Again, overexposed photometric exposure +2EV with respect to +1EV is acquired at preset intervals 1EV, wherein the +2EV is applied as current photometric exposure, and a loop of operations 224a to 224d is entered, until the resolution of dark areas of the original images is determined to meet the preset standard, and the original images are applied as the second target original images.

In an embodiment of the present disclosure, photometric exposure of a second camera is adjusted repeatedly according to preset intervals, such that resolution of dark areas of a shot meets a preset standard, and original images with a resolution of the dark areas meeting the preset standard are applied as second target original images. With repeatedly adjusted photometric exposure, information of dark areas contained in the shot images becomes more and more comprehensive.

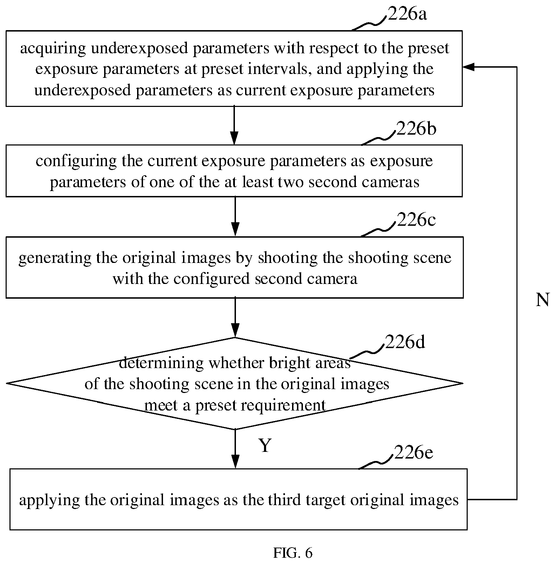

In the previous embodiment, as shown in FIG. 6, operation 226, generating original images by shooting the shooting scene with one of the at least two second cameras applying underexposed parameters with respect to the preset exposure parameters, and applying the original images as the third target original images in response to bright areas of the shooting scene in the second original images meeting a preset requirement includes the following.

Operation 226a, acquiring underexposed parameters with respect to the preset exposure parameters at preset intervals, and applying the underexposed parameters as current exposure parameters.

Operation 226b, configuring the current exposure parameters as exposure parameters of one of the at least two second cameras.

Operation 226c, generating the original images by shooting the shooting scene with the configured second camera.

Operation 226d, determining whether bright areas of the shooting scene in the original images meet a preset requirement, in response to the bright areas of the shooting scene in the original images meeting a preset requirement, proceeding to operation 226e and applying the original images as the third target original images.

In response to the bright areas of the shooting scene in the original images not meeting a preset requirement, returning to operation 226a and acquiring underexposed parameters with respect to the preset exposure parameters at preset intervals and applying the underexposed parameters as new current exposure parameters, until acquiring the third target original images.

Specifically, for example, when the exposure parameters here are photometric exposure (a value corresponding to photometric exposure is represented as EV), the preset interval may be 1EV. Exposure parameters for generating the first target original images are applied as 0EV, exposure parameters underexposed -1EV with respect to preset exposure parameters are acquired according to the preset interval of 1EV, and the underexposed exposure parameters are applied as current exposure parameters. Exposure parameters are decreased from 0EV to -1EV, which may be implemented by halving shutter or decreasing f-number by one. Normally, since an f-number of an electronic device is fixed, with other exposure parameters staying constant, photometric exposure is decreased from 0EV to -1EV by halving shutter. Certainly, there are other ways of decreasing photometric exposure from 0EV to 1EV. Current exposure parameters are configured as exposure parameters of one of the at least two second cameras.

Exposure parameters of a second camera may be adjusted, specifically is setting photometric exposure of the second camera to be -1EV. A camera that generates third target original images, a camera that generates second target original images, and a camera that generates first target original images may the same with each other. Then, original images are generated by shooting with the camera having photometric exposure of -1EV. Since they are underexposed images, whether bright areas of the original images meet a preset requirement is further determined, i.e. whether a resolution of the bright areas meets a preset standard, in response to the resolution of bright areas meeting the preset standard, the original images are applied as third target original images. The preset standard may be defined according to practical situations.

In response to the resolution of the bright areas not meeting the preset standard, the first step is returned to and current exposure parameters are redefined as follows. Again, underexposed photometric exposure -2EV with respect to -1EV is acquired at preset intervals 1EV, wherein the -2EV is applied as current photometric exposure, and a loop of operations 226a to 226d is entered, until the resolution of the bright areas of the original images is determined to meet the preset standard, and the original images are applied as the third target original images.

In an embodiment of the present disclosure, photometric exposure of a second camera is adjusted repeatedly according to preset intervals, such that resolution of bright areas of a shot meets a preset standard, and original images with a resolution of the bright areas meeting the preset standard are applied as third target original images. With repeatedly adjusted photometric exposure, information of bright areas contained in the shot images becomes more and more comprehensive.

In an embodiment, generating target original images by shooting a shooting scene with at least two second cameras includes the following.

The target original images are generated by shooting the shooting scene with at least two second cameras simultaneously.

In an embodiment of the present disclosure, an electronic device may include at least two second cameras, which are secondary cameras; when original images are shot with second cameras, secondary cameras of the electronic device may be used at the same time to shoot the original images, thus all target original images are acquired. Such that, the secondary cameras of the electronic device are used at the same time to shoot original images, in comparison with shooting original images with only one secondary camera successively, shooting duration is greatly reduced, thus improving efficiency of acquiring brightness holographic data of the shooing scene according to the target original images. A user does not need to wait for a long time in a preview interface.

In an embodiment, acquiring brightness holographic data of a shooting scene according to target original images includes the following.

Acquiring brightness distribution data of each of the target original images; and

Synthesizing brightness holographic data of the shooting scene according to the brightness distribution data of each of the target original images.

Specifically, as shown in FIG. 3, FIG. 3 is a schematic diagram of a brightness distribution histogram of a shooting scene, wherein the brightness distribution histogram is synthesized by brightness distribution histogram of each of three images. FIG. 3(a) is a brightness distribution histogram of target original images acquired by short exposing (underexposing) the shooting scene, FIG. 3(b) is a brightness distribution histogram of target original images acquired by normally exposing the shooting scene, and FIG. 3(C) is a brightness distribution histogram of target original images acquired by long exposing (overexposing) the shooting scene. FIG. 3(d) is a brightness distribution histogram of the shooting scene i.e. brightness holographic data, wherein the brightness distribution histogram is synthesized by FIG. 3(a), FIG. 3(b), and FIG. 3(c). Short exposure means shooting with a shorter exposure duration with respect to normal exposure duration, and long exposure means shooting with a longer exposure duration with respect to normal exposure duration.

Number of second cameras is at least two, so the number of target original images is at least two. Certainly, the number of target original images may be three or more. Each second camera shoots and acquires at least one target original image, certainly, each second camera may shoot and acquire two or more target original images. In an embodiment of the present disclosure, bright areas of target original images acquired by long exposing (overexposing) the shooting scene meet a preset standard, and dark areas of target original images acquired by short exposing (underexposing) the shooting scene meet another preset standard, so brightness distribution histograms of target original images acquired by short exposure (underexposure), target original images acquired by long exposure (overexposure), and target original images acquired by normal exposure are synthesized to acquire brightness distribution histogram i.e. brightness holographic data of the shooting scene. The brightness holographic data covers all data of the bright areas and dark areas of the shooting scene.

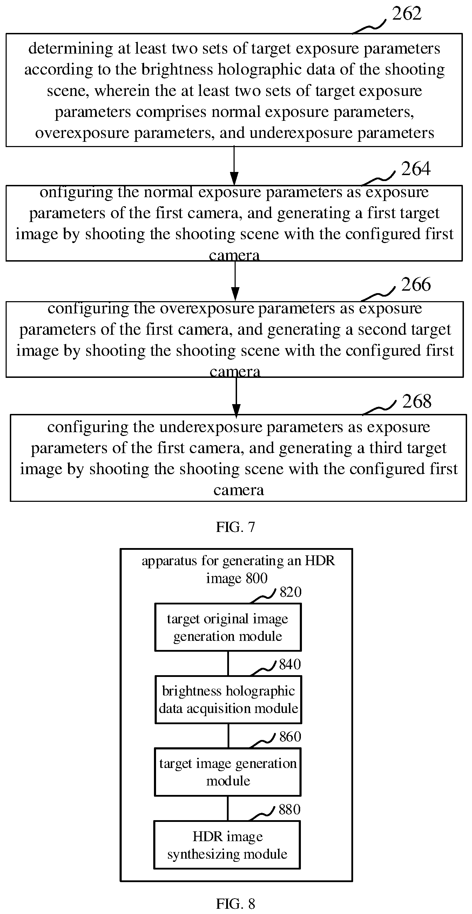

In an embodiment, as shown in FIG. 7, operation 260, determining at least two sets of target exposure parameters according to the brightness holographic data of the shooting scene, configuring one of the at least two sets of target exposure parameters as exposure parameters of the first camera, respectively, and generating at least two target images, wherein each of the at least two target images is generated by shooting the shooting scene with the first camera configured with respect to one unique set of the at least two sets of target exposure parameters includes the following.

Operation 262, determining at least two sets of target exposure parameters according to the brightness holographic data of the shooting scene, wherein the at least two sets of target exposure parameters comprises normal exposure parameters, overexposure parameters, and underexposure parameters.

Target original images are generated by shooting a shooting scene with at least two second cameras, when previewing the shooting scene with a first camera, then brightness holographic data of the shooting scene is acquired according to the target original images. After acquiring the brightness holographic data, exposure parameters of the first camera may be configured according to the brightness holographic data.

Specifically, exposure parameters of the second cameras, when target original images are generated, may be directly configured as exposure parameters of the first camera. For example, exposure parameters of the second cameras for generating first target original images, second target original images, and third target original images are acquired respectively. The first target original images are generated by shooting the shooting scene with the second cameras applying preset exposure parameters, wherein the preset exposure parameters are normal exposure parameters. The second target original images are generated by shooting the shooting scene with the second cameras applying overexposure parameters with respect to preset exposure parameters, wherein the overexposure parameters are overexposed exposure parameters with respect to preset exposure parameters. The third target original images are generated by shooting the shooting scene with the second cameras applying underexposure parameters with respect to preset exposure parameters, wherein the underexposure parameters are underexposed exposure parameters with respect to preset exposure parameters.

Specifically, since the acquired normal exposure parameters, overexposure parameters, and underexposure parameters in the above embodiments are the best shooting parameters of the shooting scene, shot images include the most comprehensive and detailed information under these parameters. However, in practical synthetization of HDR, the three sets of exposure parameters may be used as a reference, and images may be shot with minor adjustments on the three sets of exposure parameters, to synthesize HDR images with different expressiveness. For example, when there is no need for strong contrast, both overexposure parameters and underexposure parameters may be slightly adjusted towards normal exposure, such that the first camera is configured with slightly adjusted overexposure parameters and underexposure parameters respectively and images are shot and acquired, then the first camera is configured with normal exposure parameters and images are shot and acquired, images that are shot by the first camera are synthesized to acquire HDR images with not so strong contrast. Number of overexposure parameters and underexposure parameters may be one set or several sets, each set of exposure parameters corresponds to one generated image.

Certainly, overexposure parameters, underexposure parameters, and normal exposure parameters may be dynamically adjusted according to a light ratio of a shooting scene, wherein the light ratio is one of important parameters in photography; the light ratio is a ratio of brightness of light surfaces to a brightness of shadow surfaces, wherein the surfaces are main parts of a shooting subject; usually means a ratio of main light to fill-in light. The light ratio has significant importance on contrast controlling of pictures. The greater the light ratio, the higher the contrast, which is good for "hard" surfaces effect; the smaller the light ratio, the lower the contrast, which is good for "soft" surfaces effect. For example, an image has even lighting, then the light ratio is 1 to 1. The most significant of the light ratio to photography is the light and shade contrast of an image, the image has strong visual tension with high contrast, and soft and smooth with low contrast. In portrait photography, contrast may show people's characteristics well, e.g. high contrast shows hardness and rigidness, and low contrast shows softness. In landscape photography and product photography, high contrast shows hard texture, and low contrast shows blandness.

Therefore, when the light ratio of the shooting scene is relatively high, i.e. when it is needed to make the image show a "rigid" effect, then both exposure parameters and underexposure parameters may be slightly adjusted away from normal exposure parameters, to realize that showing "rigid" effect of an HDR image after synthetization. For a situation with a relatively low light ratio, adjustments may be made accordingly to realize corresponding effects.

Operation 264, configuring the normal exposure parameters as exposure parameters of the first camera, and generating a first target image by shooting the shooting scene with the configured first camera.

The normal exposure parameters may be exposure parameters of second cameras while shooting first target original images, and the second cameras shoot the shooting scene with preset exposure parameters to generate the first target original images, so the normal exposure parameters are the preset exposure parameters. Exposure parameters of the first camera are configured as the preset exposure parameters here, and the first target image is generated by shooting the shooting scene with the configured first camera.

The preset exposure parameters are exposure parameters matched with the shooting scene by an electronic device, the electronic device has stored a corresponding relationship table of shooting scenes and exposure parameters matched with the shooting scenes in advance, the second cameras are configured with the matched exposure parameters, and an image of the shooting scene with normal exposure may be shot using the configured cameras. The electronic device may find the exposure parameters matched with the shooting scene by looking up the corresponding relationship table, then one of the at least two second cameras is configured with the exposure parameters matching with the shooting scene, and first target original images are generated by the shooting the shooting scene. The first target original images are images with normal exposure.

Operation 266, configuring the overexposure parameters as exposure parameters of the first camera, and generating a second target image by shooting the shooting scene with the configured first camera.

The overexposure parameters, may directly be exposure parameters of the second cameras while shooting second target original images; may also be parameters after adjusting the overexposure parameters. Then, exposure parameters of the first camera are configured as the parameters, second target images are shot and generated by shooting the shooting scene with the configured first camera.

Operation 268, configuring the underexposure parameters as exposure parameters of the first camera, and generating a third target image by shooting the shooting scene with the configured first camera.

The underexposure parameters, may directly be exposure parameters of third cameras while shooting third target original images; may also be parameters after adjusting the overexposure parameters. Then, exposure parameters of the first camera are configured as the parameters, third target images are shot and generated by shooting the shooting scene with the configured first camera.

In an embodiment of the present disclosure, shooting is done by the second cameras under normal exposure, overexposure, and underexposure; images generated by shooting are filtered, images that meet requirements are selected after filtering; and brightness holographic data of the shooting scene are acquired. Target exposure parameters are determined according to the brightness holographic data of the shooting scene, the target exposure parameters, may directly be exposure parameters of the second cameras while shooting and acquiring images that are used for synthesizing brightness holographic data. The first camera is configured with the target exposure parameters and shoots and generates images, which are synthesized to be an HDR image, and the HDR image includes relatively more image information of the shooting scene.

The target exposure parameters may also be: exposure parameters of the second cameras while shooting and acquiring images for synthesizing brightness holographic data, and the exposure parameters are adjusted according to the brightness holographic data. The target exposure parameters may be adjusted dynamically to show different image expressiveness.

In an embodiment, normal exposure parameters are preset exposure parameters, overexposure parameters are exposure parameters for generating second target original images, and underexposure parameters are exposure parameters for generating third target original images.

In an embodiment of the present disclosure, target exposure parameters include normal exposure parameters, overexposure parameters, and underexposure parameters. The target exposure parameters may directly be exposure parameters of second cameras while shooting and acquiring images that are used for synthesizing brightness holographic data; i.e. normal exposure parameters are preset exposure parameters of the second cameras while generating first target original images, overexposure parameters are exposure parameters of the second cameras while generating second target original images, and underexposure parameters are exposure parameters of the second cameras while generating third target original images. The first camera is configured with the target exposure parameters and shoots and generates images, which are synthesized to be an HDR image, and the HDR image includes relatively more image information of the shooting scene.

In a specific embodiment, as shown in FIG. 1, an electronic device includes one first camera 110 and three second cameras 120 is taken as an example for explanation, the first camera is primary camera, and the second cameras are secondary cameras.

When a shooting scene is being previewed by the primary camera, target original images are generated by shooting the shooting scene with three secondary cameras. Specifically, first target original images are generated by shooting the shooting scene simultaneously with sub cameras A of the three secondary cameras applying preset exposure parameters (0EV).

Overexposed exposure parameters (+1EV) with respect to preset exposure parameters (0EV) are acquired at preset intervals (1EV), the overexposed parameters are applied as current exposure parameters. Sub cameras B of the three secondary cameras are configured with current exposure parameters; original images are generated by shooting the shooting scene with the configured sub cameras B; whether dark areas of the original images meet a preset requirement is determined, in response to the dark areas of the original images meeting the preset requirement, the original images are acquired as second target original images; in response to the dark areas of the original images not meeting the preset requirement, returning to a loop of acquiring overexposed parameters with respect to the preset exposure parameters at preset intervals and applying the overexposed parameters as new current exposure parameters, until acquiring the second target original images.

Underexposed exposure parameters (-1EV) with respect to preset exposure parameters (0EV) are acquired at preset intervals (1EV), the underexposed parameters are applied as current exposure parameters. Sub cameras C of the three secondary cameras are configured with current exposure parameters; original images are generated by shooting the shooting scene with the configured sub cameras C; whether bright areas of the original images meet a preset requirement is determined, in response to the bright areas of the original images meeting the preset requirement, the original images are acquired as third target original images; in response to the bright areas of the original images not meeting the preset requirement, returning to a loop of acquiring underexposed parameters with respect to the preset exposure parameters at preset intervals and applying the underexposed parameters as new current exposure parameters, until acquiring the third target original images.

Three target exposure parameters are determined according to the first, the second, and the third target original images, the three target exposure parameters include normal exposure parameters, overexposure parameters, and underexposure parameters, wherein the normal exposure parameters are preset exposure parameters, the overexposure parameters are exposure parameters for generating the second target original images, and the underexposure parameters are exposure parameters for generating third target original images.

Exposure parameters of the first camera are configured with normal exposure parameters, the first target images are generated by shooting the shooting scene with the configured first camera.

Exposure parameters of the first camera are configured with overexposure parameters, the second target images are generated by shooting the shooting scene with the configured first camera.

Exposure parameters of the first camera are configured with underexposure parameters, the third target images are generated by shooting the shooting scene with the configured first camera.

An HDR image is synthesized by the first, the second, and the third target images.

In an embodiment of the present disclosure, an electronic device includes one primary camera and three secondary cameras; first, second, and third target original images are acquired by shooting simultaneously with the three secondary cameras. Exposure parameters used for shooting the first, the second, and the third target original images are directly used as exposure parameters of the primary camera, so that first, second, and third target images are generated by shooting the shooting scene with the respectively configured primary camera. The first, the second, and the third target images are synthesized to be an HDR image.

Exposure parameters used for shooting the first, the second, and the third target original images are directly used as exposure parameters of the primary camera, so it is convenient and waiting time of the preview interface is reduced. Meanwhile, the images shot by the primary camera includes most comprehensive and sophisticated information, and the images are synthesized to be an HDR image, such that the HDR image includes the most comprehensive and sophisticated image information of the shooting scene.

It should be understood that, although operations of the flow chart in FIG. 2 are indicated sequentially by arrows, but the operations are not necessarily executed in the order indicated by the arrows. Unless it is specifically stated in the present disclosure, the operations are not restricted strictly by the order, the operations may be executed in other orders. Also, at least some operations in FIG. 2 may include several sub-operations or several stages, the sub-operations or stages are not necessarily executed at the same time, but may be executed at a different time; the order of the sub-operations or stages may not necessarily be sequential, but may be executed with other operations, or at least some part of other sub-operations or stages, in a manner of taking turns or random order.

In an embodiment, as shown in FIG. 8, an apparatus for generating an HDR image 800 is provided, which includes the following.

A target original image generation module 820, which is configured to generate target original images by shooting a shooting scene with at least two second cameras, when previewing the shooting scene with a first camera.

A brightness holographic data acquisition module 840, which is configured to acquire brightness holographic data of the shooting scene according to the target original images

A target image generation module 860, which is configured to determine at least two sets of target exposure parameters according to the brightness holographic data of the shooting scene, configure one of the at least two sets of target exposure parameters as exposure parameters of the first camera, respectively, and generate at least two target images, wherein each of the at least two target images is generated by shooting the shooting scene with the first camera configured with respect to one unique set of the at least two sets of target exposure parameters.

An HDR image synthesizing module 880, which is configured to synthesize the at least two target images and acquire the HDR image.

In an embodiment, the target original image generation module 820 includes the following.

A first target original image generation unit, configured to generate the first target original images by shooting the shooting scene with one of the at least two second cameras applying preset exposure parameters.

A second target original image generation unit, configured to generate original images by shooting the shooting scene with one of the at least two second cameras applying overexposed parameters with respect to the preset exposure parameters, and apply the original images as the second target original images in response to dark areas of the shooting scene in the first original images meeting a preset requirement.

A third target original image generation unit, configured to generate original images by shooting the shooting scene with one of the at least two second cameras applying underexposed parameters with respect to the preset exposure parameters, and apply the original images as the third target original images in response to bright areas of the shooting scene in the second original images meeting a preset requirement.

In an embodiment, the second target original image generation unit is further configured to acquire overexposed parameters with respect to the preset exposure parameters at preset intervals, and apply the overexposed parameters as current exposure parameters; configure the current exposure parameters as exposure parameters of one of the at least two second cameras; generate an original images by shooting the shooting scene with the configured second camera; determine whether dark areas of the shooting scene in the original images meet a preset requirement, in response to the dark areas of the shooting scene in the original images meeting the preset requirement, apply the original images as the second target original images; and in response to the dark areas of the shooting scene in the original images not meeting the preset requirement, return to a loop of acquiring overexposed parameters with respect to the preset exposure parameters at preset intervals and apply the overexposed parameters as new current exposure parameters, until acquire the second target original images.

In an embodiment, the third target original image generation unit is further configured to acquire underexposed parameters with respect to the preset exposure parameters at preset intervals, and apply the underexposed parameters as current exposure parameters; configure the current exposure parameters as exposure parameters of one of the at least two second cameras; generate an original images by shooting the shooting scene with the configured second camera; determine whether bright areas of the shooting scene in the original images meet a preset requirement, in response to the bright areas of the shooting scene in the original images meeting a preset requirement, apply the original images as the third target original images; and in response to the bright areas of the shooting scene in the original images not meeting a preset requirement, return to a loop of acquiring underexposed parameters with respect to the preset exposure parameters at preset intervals and apply the underexposed parameters as new current exposure parameters, until acquire the third target original images.

In an embodiment, the target original image generation module 820 is further configured to generate the target original images by shooting the shooting scene with at least two second cameras simultaneously.

In an embodiment, the brightness holographic data acquisition module 840 is further configured to acquire brightness distribution data of each of the target original images; and synthesize brightness holographic data of the shooting scene according to the brightness distribution data of each of the target original images.

In an embodiment, the target image generation module 860 is further configured to determine at least two sets of target exposure parameters according to the brightness holographic data of the shooting scene, wherein the at least two sets of target exposure parameters comprise normal exposure parameters, overexposure parameters, and underexposure parameters; configure the normal exposure parameters as exposure parameters of the first camera, and generate a first target image by shooting the shooting scene with the configured first camera; configure the overexposure parameters as exposure parameters of the first camera, and generate a second target image by shooting the shooting scene with the configured first camera; and configure the underexposure parameters as exposure parameters of the first camera, and generate a third target image by shooting the shooting scene with the configured first camera.

Division of each module of the above apparatus for generating an HDR image is only taken as an example; in other embodiments, the apparatus for generating the HDR image may be divided into different modules as needed, to accomplish all or some functions of the above apparatus for generating the HDR image.

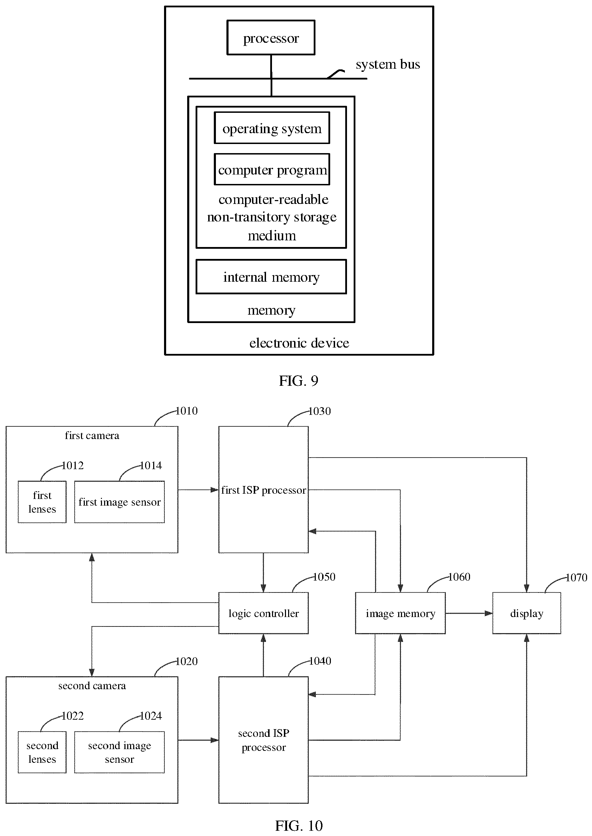

FIG. 9 is a schematic diagram of an internal structure of an electronic device according to an embodiment of the present disclosure. As shown in FIG. 9, the electronic device includes a processor and a memory connected via a system bus. The processor is configured to provide computing and control capabilities to support the operation of the entire electronic device. The memory may include a computer-readable non-transitory storage medium and an internal memory. The computer-readable non-transitory storage medium stores an operating system and a computer program. The computer program may be executed by the processor to implement a method for generating an HDR image as provided in the following embodiments. The internal memory provides a high-speed caching environment for the computer program of the operating system in the computer-readable non-transitory storage medium to run. The electronic device may be a cell phone, a tablet computer, or a personal digital assistant or wearable device and the like.

The implementation of each module of the apparatus for generating an HDR image provided in the embodiments of the present disclosure may be in a form of a computer program. The computer program may run on a terminal or a server. The computer program constitutes a program module that may be stored on a memory of the terminal or the server. The computer program, when executed by the processor, implements the operation of the method described in the embodiments of the present disclosure.

An electronic device is provided by an embodiment of the present disclosure. The electronic device includes image processing circuits which may be implemented using hardware and/or software components, and may include various processing units that define an ISP (Image Signal Processing) pipeline. FIG. 10 is a schematic diagram of an image processing circuit according to an embodiment of the present disclosure. As shown in FIG. 10, for the purpose of illustration, only aspects of techniques for generating an HDR image associated with the embodiments of the present disclosure are illustrated.

As shown in FIG. 10, the image processing circuits include a first ISP processor 1030, a second ISP processor 1040, and a logic controller 1050. A first camera 1010 includes one or more first lenses 1012 and a first image sensor 1014. A first image sensor 1014 may include a color filter array (e.g., a Bayer filter), and the first image sensor 1014 may acquire light intensity and wavelength information of each image pixel captured by the first image sensor 1014 and provide a set of image data that may be processed by the first ISP processor 1030. A second camera 1020 includes one or more second lenses 1022 and a second image sensor 1024. The second image sensor 1024 may include a color filter array (e.g., a Bayer filter), and the second image sensor 1024 may acquire light intensity and wavelength information of each image pixel captured by the second image sensor 1024 and provide a set of image data that may be processed by the second ISP processor 1040.

A first image captured by the first camera 1010 is transmitted to the first ISP processor 1030 for processing, and after processing the first image, the first ISP processor 1030 may send statistical data of the first image (such as brightness of the image, contrast value of the image, the color of the image, etc.) to the logic controller 1050, and the logic controller 1050 may determine control parameters of the first camera 1010 according to the statistical data, so that the first camera 1010 may perform operations such as auto-focus, auto-exposure, etc. according to the control parameters. The first image may be stored in the image memory 1060 after being processed by the first ISP processor 1030, and the first ISP processor 1030 may also read the image stored in the image memory 1060 for processing. Alternatively, the first image may be sent directly to the display 1070 for display after being processed by the ISP processor 1030, and the display 1070 may also read the image in the image memory 1060 for display.

The first ISP processor 1030 processes the image data on a pixel-by-pixel basis in a variety of formats. For example, each image pixel may have a bit depth of 8, 10, 12, or 14 bits, and the first ISP processor 1030 may perform one or more operations for generating HDR images on the image data, collecting statistical information about the image data. The operations for generating the HDR images may be performed at the same or different bit depth precision.

The image memory 1060 may be part of a memory device, a storage device, or a separate dedicated memory within an electronic device, and may include DMA (Direct Memory Access) features.

When received from an interface of the first image sensor 1014, the first ISP processor 1030 may perform one or more operations for generating HDR images, such as time domain filtering. The processed image data may be sent to image memory 1060 for additional processing prior to being displayed. The first ISP processor 1030 receives the processed data from the image memory 1060 and processes the processed data for image data in RGB and YCbCr color space. The image data processed by the first ISP processor 1030 may be output to the display 1070 for viewing by a user and/or further processing by a graphic engine or a GPU (Graphics Processing Unit). In addition, the output of the first ISP processor 1030 may also be sent to the image memory 1060, and the display 1070 may read the image data from the image memory 1060. In one embodiment, the image memory 1060 may be configured to implement one or more frame buffers.

The statistical data determined by the first ISP processor 1030 may be sent to the logic controller 1050. For example, the statistical data may include statistics of first image sensor 1014 such as auto-exposure, auto-white-balance, auto-focus, flicker detection, black level compensation, first lens 1012 shadow correction, etc. The logic controller 1050 may include a processor and/or microcontroller executing one or more routines (e.g., firmware), and the one or more routines may determine control parameters for the first camera 1010 and control parameters for the first ISP processor 1030, according to the received statistics. For example, the control parameters of the first camera 1010 may include gain, integration time for exposure control, anti-shake parameters, flash control parameters, first lens 1012 control parameters (e.g., focal length for focusing or zooming), or a combination of these parameters, etc. The ISP control parameters may include gain levels and color correction matrices for auto-white-balance and color adjustment (e.g., during RGB processing), and first lens 1012 shadow correction parameters.

Similarly, a second image captured by the second camera 1020 is transmitted to the second ISP processor 1040 for processing, and after processing the first image, the second ISP processor 1040 may send statistical data of the second image (e.g., the brightness of the image, contrast value of the image, the color of the image, etc.) to the logic controller 1050, and the logic controller 1050 may determine control parameters of the second camera. The control logic 1050 may determine the control parameters of the second camera 1020 according to the statistical data, so that the second camera 1020 may perform operations such as auto-focus, auto-exposure, etc. according to the control parameters. The second image may be stored in the image memory 1060 after being processed by the second ISP processor 1040, and the second ISP processor 1040 may also read the image stored in the image memory 1060 for processing. In addition, the second image may be processed by the ISP processor 1040 and sent directly to the display 1070 for display, and the display 1070 may also read the image in the image memory 1060 for display. The second camera 1020 and the second ISP processor 1040 may also implement the process as described for the first camera 1010 and the first ISP processor 1030.

The image processing circuit provided according to the embodiments of the present disclosure may implement the above-mentioned method for generating HDR images. The electronic device may have multiple cameras, the cameras include lenses and image sensor sets corresponding to the lenses, and the image sensors of the multiple cameras are arranged in a rectangular diagonal manner. The process for the electronic device implementing the method for generating HDR images is as described in the above embodiments and will not be repeated herein.

A computer-readable non-transitory storage medium is also provided in the embodiments of the present disclosure. One or more computer-readable non-transitory storage media containing computer-executable instructions that, when the computer-executable instructions are executed by one or more processors, cause the processors to perform the operations of the method for generating HDR images.

A computer program product containing instructions that, when run on a computer, causes the computer to perform the method for generating HDR images.

Any reference to a memory, storage, database, or other medium used in the embodiments of the present disclosure may include non-transitory and/or transitory memory. Suitable non-transitory memory may include read-only memory (ROM), programmable ROM (PROM), electrically programmable ROM (EPROM), electrically erasable programmable ROM (EEPROM), or flash memory. Transitory memory may include random access memory (RAM), which is used as external high-speed cache memory. For illustration and not limitation, RAM is available in a variety of forms, such as static RAM (SRAM), dynamic RAM (DRAM), synchronous DRAM (SDRAM), double data rate SDRAM (DDR SDRAM), enhanced SDRAM (ESDRAM), synchronous link (Synchlink) DRAM (SLDRAM), memory bus (Rambus) direct RAM (RDRAM), direct memory bus dynamic RAM (DRDRAM), and memory bus dynamic RAM (RDRAM).

The above described embodiments only show several embodiments of the present disclosure, and their descriptions are more specific and detailed, but they should not be construed as a limitation of the scope of the patent of the present disclosure. It should be noted that for a person skilled in the art, a number of variations and improvements may be made without departing from the conception of the present disclosure, and these belong to the scope of protection of the present disclosure. Therefore, the scope of protection of the patent of this disclosure shall be subject to the attached claims.

## Claims

1. A method for generating an HDR image, comprising:
generating target original images by shooting a shooting scene with at least two second cameras, when previewing the shooting scene with a first camera;
acquiring brightness holographic data of the shooting scene according to the target original images;
determining at least two sets of target exposure parameters according to the brightness holographic data of the shooting scene, configuring one of the at least two sets of target exposure parameters as exposure parameters of the first camera, respectively, and generating at least two target images, wherein each of the at least two target images is generated by shooting the shooting scene with the first camera configured with respect to one unique set of the at least two sets of target exposure parameters; and
synthesizing the at least two target images and acquiring the HDR image.

2. The method as claimed in claim 1, wherein the generating target original images by shooting a shooting scene with at least two second cameras comprises:
selecting a camera from the at least two second cameras, and acquiring different target original images by shooting repeatedly with the camera applying different exposure parameters.

3. The method as claimed in claim 1, wherein the generating target original images by shooting a shooting scene with at least two second cameras comprises:
generating the target original images by overexposure shooting, or underexposure shooting the shooting scene with the at least two second cameras respectively.

4. The method as claimed in claim 1, wherein the target original images comprises first target original images, second target original images, and third target original images;
wherein the generating target original images by shooting a shooting scene with at least two second cameras comprises:
generating the first target original images by shooting the shooting scene with one of the at least two second cameras applying preset exposure parameters;
generating original images by shooting the shooting scene with one of the at least two second cameras applying overexposed parameters with respect to the preset exposure parameters, and applying the original images as the second target original images in response to dark areas of the shooting scene in the first original images meeting a preset requirement;
generating original images by shooting the shooting scene with one of the at least two second cameras applying underexposed parameters with respect to the preset exposure parameters, and applying the original images as the third target original images in response to bright areas of the shooting scene in the second original images meeting a preset requirement.

5. The method as claimed in claim 4, wherein the generating original images by shooting the shooting scene with one of the at least two second cameras applying overexposed parameters with respect to the preset exposure parameters, and applying the original images as the second target original images in response to dark areas of the shooting scene in the original images meeting a preset requirement comprises:
acquiring overexposed parameters with respect to the preset exposure parameters at preset intervals, and applying the overexposed parameters as current exposure parameters;
configuring the current exposure parameters as exposure parameters of one of the at least two second cameras;
generating an original images by shooting the shooting scene with the configured second camera;
determining whether dark areas of the shooting scene in the original images meet a preset requirement, in response to the dark areas of the shooting scene in the original images meeting the preset requirement, applying the original images as the second target original images; and
in response to the dark areas of the shooting scene in the original images not meeting the preset requirement, returning to a loop of acquiring overexposed parameters with respect to the preset exposure parameters at preset intervals and applying the overexposed parameters as new current exposure parameters, until acquiring the second target original images.

6. The method as claimed in claim 4, wherein the generating original images by shooting the shooting scene with one of the at least two second cameras applying underexposed parameters with respect to the preset exposure parameters, and applying the original images as the third target original images in response to bright areas of the shooting scene in the original images meeting a preset requirement comprises:
acquiring underexposed parameters with respect to the preset exposure parameters at preset intervals, and applying the underexposed parameters as current exposure parameters;
configuring the current exposure parameters as exposure parameters of one of the at least two second cameras;
generating an original images by shooting the shooting scene with the configured second camera;
determining whether bright areas of the shooting scene in the original images meet a preset requirement, in response to the bright areas of the shooting scene in the original images meeting a preset requirement, applying the original images as the third target original images; and
in response to the bright areas of the shooting scene in the original images not meeting a preset requirement, returning to a loop of acquiring underexposed parameters with respect to the preset exposure parameters at preset intervals and applying the underexposed parameters as new current exposure parameters, until acquiring the third target original images.

7. The method as claimed in claim 1, wherein the generating target original images by shooting a shooting scene with at least two second cameras comprises:
generating the target original images by shooting the shooting scene with at least two second cameras simultaneously.

8. The method as claimed in claim 1, wherein the acquiring brightness holographic data of the shooting scene according to the target original images comprises:
acquiring brightness distribution data of each of the target original images; and
synthesizing brightness holographic data of the shooting scene according to the brightness distribution data of each of the target original images.

9. The method as claimed in claim 4, wherein the determining at least two sets of target exposure parameters according to the brightness holographic data of the shooting scene, configuring one of the at least two sets of target exposure parameters as exposure parameters of the first camera, respectively, and generating at least two target images, wherein each of the at least two target images is generated by shooting the shooting scene with the first camera configured with respect to one unique set of the at least two sets of target exposure parameters comprises:
determining at least two sets of target exposure parameters according to the brightness holographic data of the shooting scene, wherein the at least two sets of target exposure parameters comprises normal exposure parameters, overexposure parameters, and underexposure parameters;
configuring the normal exposure parameters as exposure parameters of the first camera, and generating a first target image by shooting the shooting scene with the configured first camera;
configuring the overexposure parameters as exposure parameters of the first camera, and generating a second target image by shooting the shooting scene with the configured first camera; and
configuring the underexposure parameters as exposure parameters of the first camera, and generating a third target image by shooting the shooting scene with the configured first camera.

10. The method as claimed in claim 4, wherein the determining at least two sets of target exposure parameters according to the brightness holographic data of the shooting scene, configuring one of the at least two sets of target exposure parameters as exposure parameters of the first camera, respectively, and generating at least two target images, wherein each of the at least two target images is generated by shooting the shooting scene with the first camera configured with respect to one unique set of the at least two sets of target exposure parameters comprises:
determining at least two sets of target exposure parameters according to the brightness holographic data of the shooting scene, wherein the at least two sets of target exposure parameters comprises normal exposure parameters, overexposure parameters, and underexposure parameters;
adjusting the overexposure parameters and the underexposure parameters;
configuring the normal exposure parameters as exposure parameters of the first camera, and generating a first target image by shooting the shooting scene with the configured first camera;
configuring the adjusted overexposure parameters as exposure parameters of the first camera, and generating a second target image by shooting the shooting scene with the configured first camera; and
configuring the adjusted underexposure parameters as exposure parameters of the first camera, and generating a third target image by shooting the shooting scene with the configured first camera.

11. The method as claimed in claim 10, wherein the adjusting the overexposure parameters and underexposure parameters comprises:
adjusting the overexposure parameters and underexposure parameters according to light ratio and whether the shooting scene is in high contrast or not.

12. The method as claimed in any one of claims 1 to 11, wherein the normal exposure parameters are preset exposure parameters, the overexposure parameters are exposure parameters for generating the second target original image, and the underexposure parameters are exposure parameters for generating the third target original image.

13. The method as claimed in claim 12, wherein the preset exposure parameters are exposure parameters matching with the shooting scene.

14. An apparatus for generating an HDR image, comprising:
a target original image generation module, configured to generate target original images by shooting a shooting scene with at least two second cameras, when previewing the shooting scene with a first camera;
a brightness holographic data acquisition module, configured to acquire brightness holographic data of the shooting scene according to the target original images;
a target image generation module, configured to determine at least two sets of target exposure parameters according to the brightness holographic data of the shooting scene, configure one of the at least two sets of target exposure parameters as exposure parameters of the first camera, respectively, and generate at least two target images, wherein each of the at least two target images is generated by shooting the shooting scene with the first camera configured with respect to one unique set of the at least two sets of target exposure parameters; and
an HDR image synthesizing module, configured to synthesize the at least two target images and acquire the HDR image.

15. The apparatus as claimed in claim 14, wherein the target original image generation module is further configured to select a camera from the at least two second cameras, and acquire different target original images by shooting repeatedly with the camera applying different exposure parameters.

16. The apparatus as claimed in claim 14, wherein the target original image generation module is further configured to generate the target original images by overexposure shooting, or underexposure shooting the shooting scene with the at least two second cameras respectively.

17. The apparatus as claimed in claim 14, wherein the target original images comprises first target original images, second target original images, and third target original images;
and the target original image generation module comprises:
a first target original image generation unit, configured to generate the first target original images by shooting the shooting scene with one of the at least two second cameras applying preset exposure parameters;
a second target original image generation unit, configured to generate original images by shooting the shooting scene with one of the at least two second cameras applying overexposed parameters with respect to the preset exposure parameters, and apply the original images as the second target original images in response to dark areas of the shooting scene in the first original images meeting a preset requirement;
a third target original image generation unit, configured to generate original images by shooting the shooting scene with one of the at least two second cameras applying underexposed parameters with respect to the preset exposure parameters, and apply the original images as the third target original images in response to bright areas of the shooting scene in the second original images meeting a preset requirement.

18. The apparatus as claimed in claim 17, wherein the second target original image generation unit is further configured to
acquire overexposed parameters with respect to the preset exposure parameters at preset intervals, and apply the overexposed parameters as current exposure parameters;
configure the current exposure parameters as exposure parameters of one of the at least two second cameras;
generate an original images by shooting the shooting scene with the configured second camera;
determine whether dark areas of the shooting scene in the original images meet a preset requirement, in response to the dark areas of the shooting scene in the original images meeting the preset requirement, apply the original images as the second target original images; and
in response to the dark areas of the shooting scene in the original images not meeting the preset requirement, return to a loop of acquiring overexposed parameters with respect to the preset exposure parameters at preset intervals and apply the overexposed parameters as new current exposure parameters, until acquiring the second target original images.

19. An electronic device comprising a memory and a processor, wherein the memory stores a computer program and when the computer program is executed by the processor, the processor performs operations of methods for generating an HDR image as claimed in any of the claims 1 to 13.

20. A computer-readable non-transitory storage medium storing a computer program, wherein the computer program, when executed by a processor, executes the method of any one of claims 1 to 13.
